# EUROPEAN PATENT APPLICATION

(11) **EP 4 844 460 A1**
(43) Date of publication of application: **25.11.2026**
(21) Application number: 24918778.2
(22) Date of filing: 15.01.2024
(51) Int. Cl.: G02B 6/125

(54) **OPTICAL MULTIPLEXING DEVICE**

(71) Applicant: TekJP, Inc., Tokyo 157-0072 (JP)
(72) Inventor: KASAHARA Takeshi, Tokyo 157-0072 (JP); MATSUI Hiroshi, Tokyo 157-0072 (JP)
(74) Representative: Kiwit, Benedikt
(86) International application number: PCT/JP2024/000769
(87) International publication number: WO 2025/154130

(57) **Abstract**

Provided is an optical multiplexing device capable of: multiplexing a plurality of light beams; reducing the diffusion angle of emitted light as compared with the prior art; and improving light-utilization efficiency. This optical multiplexing device comprises: a plurality of incident ports into which a plurality of light beams respectively enter; a single emission port from which light obtained by multiplexing the plurality of light beams is emitted; a first intersection region in which one light beam that has entered from the incident port intersects with another light beam; a reflection surface on which the one light beam that has passed through the first intersection region is reflected; and a second intersection region in which the one light beam reflected by the reflection surface crosses the other light beam again.

## Description

### TECHNICAL FIELD

The present invention relates to an optical multiplexing device.

### BACKGROUND ART

A projector device and a display device including a light source, such as a laser light emitting element, have been known in the art. For example, a projector device known in the art condenses outgoing light from a light source, such as a planar lightwave circuit (PLC), onto a screen through a condensing lens to produce a minute light spot. This device vibrates a micro-electro-mechanical systems (MEMS) mirror located between the condensing lens and the screen within a predetermined angle, and scans the light spot on the screen, thereby forming an image. This projector device is used not only for such a MEMS scanning projector but also for any other type of projectors, such as a liquid crystal on silicon (LCOS) projector, a digital micromirror device (DMD) projector, and a vector scanning projector. This projector device is further available not only for projectors but also for a wide variety of uses such as for confocal microscopes and for light sources for sensing and lighting.

An optical multiplexing device has been suggested as a device that can multiplex a plurality of light beams so as to be used as a light source (see, for example, Patent Documents 1 and 2).

### Citation List

### Patent Documents

Patent Document 1: Japanese Unexamined Patent Application Publication No. 2020-154335
Patent Document 2: Japanese Unexamined Patent Application Publication No. H10-142434

### DISCLOSURE OF THE INVENTION

### Problems to be Solved by the Invention

In a case in which the divergence (diffusion angle) of outgoing light from the light source is wide, vignetting occurs at the condensing lens and the mirror, resulting in a decrease in the light use efficiency. In addition, in a case in which the area size of outgoing light from the light source is relatively large, the diameter of the light spot produced on the screen by the condensing lens is large. As a result, a high-definition image cannot be obtained.

In the technology disclosed in Patent Document 1, a plurality of optical waveguides extending in one direction are connected together at a predetermined angle, and incident beams are joined together and multiplexed. Such a method unfortunately causes a multiplexing region to have an acute portion. In fact, it is impossible to machine such an acute portion. Thus, an about 3-µm-long flat portion is required between each adjacent pair of the optical waveguides. This makes it theoretically difficult for the multiplexing angle at which beams are multiplexed to be smaller than a predetermined angle.

The technology disclosed in Patent Document 2 relates to an optical multiplexing element that causes a first beam outgoing from a first input optical waveguide and a second beam outgoing from a second input optical waveguide substantially orthogonal to the first input optical waveguide to be reflected off a reflective surface and then to enter an output optical waveguide to multiplex the beams. In such a method, settings must be made such that the optical axis of the multiplexed beams is located between the optical axes of the first beam and the second beam. Thus, as the number of beams to be multiplexed increases, the area size of the exit increases. Thus, the focused spot size increases depending on the magnification of a lens that condenses output light, resulting in a decrease in the light use efficiency.

The present invention has been made in view of the foregoing problems, and an object thereof is to provide an optical multiplexing device that allows the diffusion angle of outgoing light and the exit size to be smaller than those in the known art and that can improve the light use efficiency.

### Means for Solving the Problems

(1) The present invention relates to an optical multiplexing device capable of multiplexing a plurality of sets of light rays. The device includes: a plurality of entrances into which a corresponding one of the plurality of sets of light rays enters; a single exit from which the sets of the plurality of light rays multiplexed exit; a first intersection region allowing one of the plurality of sets of light rays that have entered the optical multiplexing device through the plurality of entrances to intersect with another one of the plurality of sets of light rays; a reflective surface off which the one of the plurality of sets of light rays having passed through the first intersection region is reflected; and a second intersection region allowing the one of the plurality of sets of light rays reflected off the reflective surface to intersect with the another one of the plurality of sets of light rays again.
(2) The optical multiplexing device according to the aspect (1) further including: a multiplexing path through which the plurality of sets of light rays are multiplexed, wherein a back end of the multiplexing path is connected to another multiplexing path in a later stage or has the exit, an angle of inclination of the reflective surface with respect to the one of the plurality of sets of light rays entering the optical multiplexing device through the plurality of entrances is set so that the second intersection region is located at a junction between the multiplexing path and the another multiplexing path or at the exit, and a multiplexing angle that is an angle between the one of the plurality of sets of light rays reflected off the reflective surface and the another one of the plurality of sets of light rays is 0.23° or less.
(3) The optical multiplexing device according to the aspect (1) or (2) further including: a waveguide having an entrance from among the plurality of entrances; and a multiplexing path connected to the waveguide at a predetermined angle, wherein the waveguide has a length of 1.5 mm or less.
(4) The optical multiplexing device according to any one of the aspects (1) to (3) further including: a first optical path unit having the entrance; at least one second optical path unit having an entrance from among the plurality of entrances, the first intersection region, the reflective surface, and the second intersection region; and a third optical path unit having the entrance from among the plurality of entrances, the first intersection region, the reflective surface, the second intersection region, and the exit, the at least one second optical path unit comprising one or more second optical path units installed as needed.

### Effects of the Invention

According to the present invention, an optical multiplexing device that allows the diffusion angle of outgoing light to be smaller than in the known art and that can improve the light use efficiency can be provided.

### BRIEF DESCRIPTION OF THE DRAWINGS

Fig. 1 is a schematic diagram showing a configuration of an optical multiplexing device according to a first embodiment;
Fig. 2 is an enlarged view of an essential portion of Fig. 1;
Fig. 3 is a schematic diagram showing how light enters an entrance according to the first embodiment;
Fig. 4 is a schematic diagram showing a configuration of an optical multiplexing device according to Comparative Example 1;
Fig. 5 illustrates the simulation results of an optical multiplexing device according to Example 1;
Fig. 6 illustrates the simulation results of an optical multiplexing device according to Comparative Example 1;
Fig. 7 illustrates the simulation results of an optical multiplexing device according to Example 2;
Fig. 8 illustrates the simulation results of an optical multiplexing device according to Example 3; and
Fig. 9 illustrates the simulation results of an optical multiplexing device according to Example 4.

### PREFERRED MODE FOR CARRYING OUT THE INVENTION

One embodiment of the present invention will be described below with reference to the drawings. The contents of the present invention should not be limited to the description of the following embodiment.

### ≪First Embodiment≫

### <Configuration of Optical Multiplexing Device>

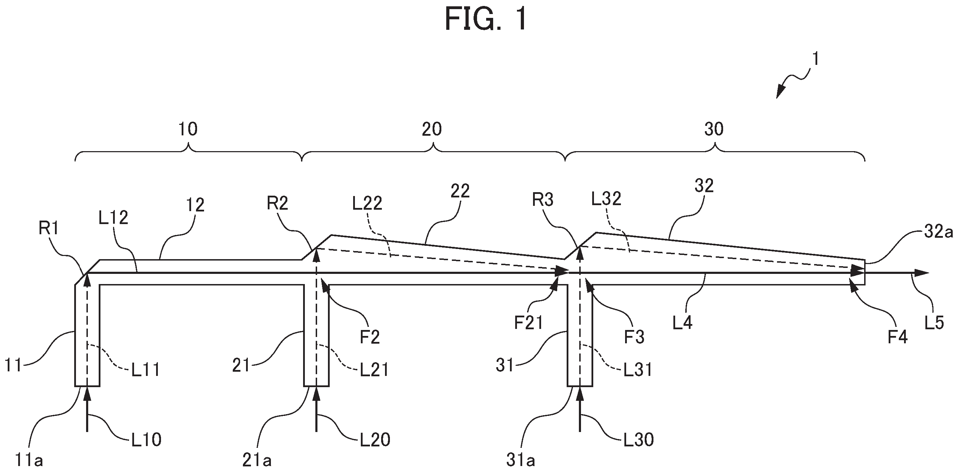

As illustrated in Fig. 1, an optical multiplexing device 1 according to this embodiment can multiplex a set of a plurality of light rays L10, a set of a plurality of light rays L20, and a set of a plurality of light rays L30 to emit outgoing light L5. The sets of light rays L10, L20, and L30 enter the inside of the optical multiplexing device 1 through corresponding entrances 11a, 21a, and 31a, and are multiplexed inside the optical multiplexing device 1 into outgoing light L5 to be emitted. In this specification and claims, the plurality of light rays may be a plurality of light rays independent of wavelength. In other words, at least one of the sets of light rays may have the same wavelength. The sets of light rays may have wavelengths different from one another. In this embodiment, the sets of light rays L10, L20, and L30 are not specifically limited. For example, the set of light rays L10 may be red light rays, the set of light rays L20 may be blue light rays, and the set of light rays L30 may be green light rays.

In each of Figs. 1 to 5, the positions of arrows indicating the corresponding sets of light rays indicate the positions of the optical axes of the corresponding sets of light rays. Each of these figures is an exaggerated schematic view showing the relationship and angles among the sets of light rays for ease of understanding, and does not faithfully illustrate the configuration of an actual optical multiplexing device.

A medium forming the optical multiplexing device 1 is not specifically limited as long as it is made of a material that can transmit light with low losses, and is, for example, a glass material, silicon, or any other suitable material. The structure of the optical multiplexing device 1 can be fabricated by, for example, a known semiconductor fabrication process. Alternatively, the medium may be a gas such as air. In this case, the optical multiplexing device 1 has optical paths each having an inner surface configured as a mirror surface, and is in the shape of a hollow mirror.

The optical multiplexing device 1 includes optical path units 10, 20, and 30 corresponding to the sets of light rays L10, L20, and L30, respectively. Fig. 1 illustrates the optical multiplexing device 1 that multiplexes three sets of light rays of three different wavelengths. However, in the present disclosure, the number of sets of light rays to be multiplexed merely needs to be two or more, and is not specifically limited. If an optical multiplexing device that multiplexes two sets of light rays of different wavelengths is to be configured, an optical multiplexing device that does not include an optical path unit 20 and that has its optical path units 10 and 30 connected together needs to be configured. If an optical multiplexing device that multiplexes four or more sets of light rays of different wavelengths is to be configured, an optical multiplexing device including an optical path unit 10, a plurality of optical path units 20 the number of which is adapted to the number of sets of light rays intended to be multiplexed, and an optical path unit 30 needs to be configured.

The optical path unit 10 includes a waveguide 11 and a waveguide 12 in Fig. 1. The waveguide 11 has the entrance 11a into which the set of light rays L10 enter. The waveguides 11 and 12 are connected together at a substantially right angle in Fig. 1. A surface of the junction between the waveguides that faces the waveguide 11 forms a reflective surface R1. The set of light rays L10 entering the waveguide 11 through the entrance 11a passes through the waveguide 11 (a set of light rays L11), and is reflected off the reflective surface R1 to enter the waveguide 12 (a set of light rays L12). The angle of the reflective surface R1 needs to be set so that the optical axis of the set of light rays L12 reflected off the reflective surface R1 is guided in a direction along an optical path of the waveguide 12 and passes through substantially the center of the waveguide 12. Thus, the waveguides 11 and 12 can be connected together at any desired angle. However, the angle of the reflective surface R1 needs to be set to exceed the critical angle of the medium (to cause total reflection off the reflective surface). The same statement applies to the following reflective surfaces. The waveguide 12 is connected to a multiplexing path 22 of the optical path unit 20, and the set of light rays L12 enters the multiplexing path 22.

The optical path unit 10 does not have to include the waveguide 11. In this case, the set of light rays L10 can be caused to be directly incident upon the connection surface of the waveguide 12 with the waveguide 11 in Fig. 1. The optical path unit 10 including the waveguide 11 defines the position through which beams are to enter the waveguide 12 in terms of the shape of the waveguide. This makes it easier to assemble and adjust a real device.

The optical path unit 10 does not have to include the reflective surface R1. In this case, one linear waveguide 12 needs to be substituted for the waveguide 11 and the waveguide 12, and needs to have an end surface with an entrance. In contrast, the optical path unit 10 having the reflective surface R1 allows a device that causes light to enter the entrance 11a to be freely positioned as desired.

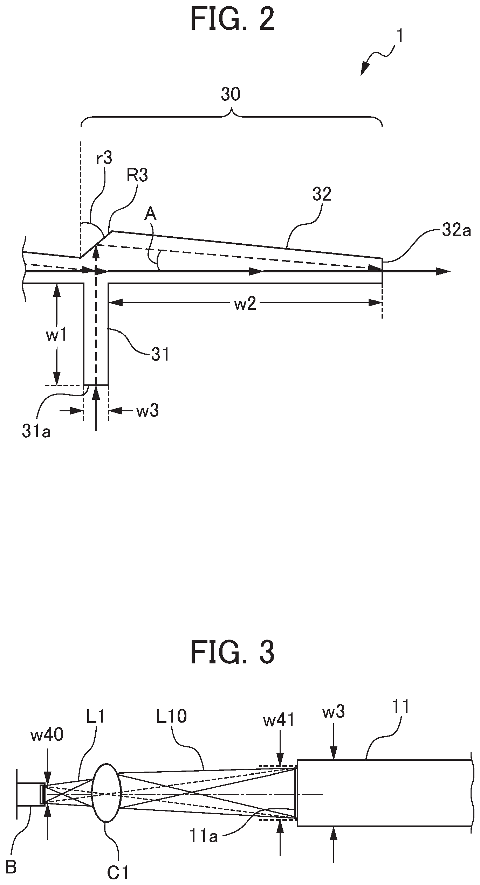

The configuration of the device that causes light to enter the entrance 11a will be described here with reference to Fig. 3. As illustrated in Fig. 3, divergent rays L1 emitted from a light source B (the maximum width of a light emitting region: w40) are condensed by input optics C1 including a condensing lens and other suitable components. The set of light rays L10 condensed enters the entrance 11a. At this time, the maximum width w41 of a light emitting region image formed on the entrance 11a is equal to w40 × β (w41 = w40 × β), where β represents the lateral magnification of the input optics C1. Thus, to allow all of beams emitted from the light source B to enter the entrance 11a, the width w3 of the entrance 11a needs to be greater than the width w41. In a case in which the light source B is a single-mode laser diode (LD), the width w3 of the entrance 11a is preferably equal to or greater than 1.5 µm. In a case in which the light source B is a multimode LD, the width w3 of the entrance 11a is preferably equal to or greater than 80 µm.

The optical path unit 20 includes a waveguide 21 and the multiplexing path 22. The number of the optical path unit or units 20 can be varied in accordance with the number of sets of light rays to be multiplexed, and the optical path unit 20 can be omitted. The waveguide 21 has the entrance 21a into which the set of light rays L20 enter. The waveguide 21 and the multiplexing path 22 are connected together at a substantially right angle in Fig. 1. A surface of the junction between the waveguide and the multiplexing path that faces the waveguide 21 forms a reflective surface R2. The junction is further connected to the waveguide 12. The waveguide 12 and the multiplexing path 22 are connected together to extend in the same direction. The angle at which the waveguides 12 and 21 are connected together and the angle at which the waveguide 21 and the multiplexing path 22 are connected together can be freely set as desired. The optical path unit 20 does not have to include the waveguide 21 just like the optical path unit 10. In this case, the set of light rays L20 can be caused to be directly incident upon the connection surface of the waveguide 21 with the multiplexing path 22.

The set of light rays L20 entering the waveguide 21 through the entrance 21a passes through the waveguide 21 (a set of light rays L21), and is reflected off the reflective surface R2 to enter the multiplexing path 22 (a set of light rays L22). The reflective surface R2 is a reflective surface off which one of the sets of light rays entering the corresponding waveguides through the corresponding entrances (the set of light rays L21) is initially reflected. The angle of the reflective surface R2 can be freely adjusted as desired just like the angle of the reflective surface R1. The multiplexing path 22 is connected to a multiplexing path 32 of the optical path unit 30.

The set of light rays L21 entering the waveguide 21 through the entrance 21a (one of the sets of light rays) intersects with the set of light rays L12 (another one of the sets of light rays) emitted from the optical path unit 10 in the preceding stage in a first intersection region F2 located at the junction between the waveguides 21 and 12. Thereafter, the set of light rays L21 is reflected off the reflective surface R2 to propagate through the multiplexing path 22 (the set of light rays L22). The set of light rays L22 reflected off the reflective surface R2 again intersects with the set of light rays L12 (the another one of the sets of the light rays) in a second intersection region F21. As a result, these sets of light rays are multiplexed (a set of light rays L4). Thereafter, the set of light rays L4 enters the multiplexing path 32. In this specification and claims, the position at which sets of light rays intersect with each other and the position at which a set of light rays is reflected are set with reference to the optical axis of each set of light rays.

In Fig. 1, the second intersection region F21 is located at the back end of the multiplexing path 22. However, this is merely an example. The second intersection region F21 may be located in the multiplexing path 32. The second intersection region F21 located at or rearward of the back end of the multiplexing path 22 can reduce the number of times reflection occurs off the side surface of the optical path. This can narrow the diffusion angle of the outgoing light. The position of the second intersection region F21 can be set by adjusting the direction of the optical axis of the set of light rays L21, the angle of the reflective surface R2, and the length of the multiplexing path 22.

As illustrated in Fig. 1, the multiplexing path 22 is configured such that a portion thereof connected to a multiplexing path in a later stage has a smaller optical path width than a portion thereof having the reflective surface R2 does. Specifically, the optical path width of the multiplexing path 22 decreases from the reflective surface R2 to the junction thereof with the multiplexing path 32 in linear proportion to the length between the reflective surface R2 and the junction. Since the position at which the sets of light rays are multiplexed is located near the junction with the multiplexing path 32, beams reflected off the reflective surface R2 propagate from the reflective surface R2 to the multiplexing path 32 without being reflected off the side surface of the waveguide. Meanwhile, it has been theoretically found that an increase in the number of times beams are reflected off the side surface of the waveguide triggers an increase in the diffusion angle of outgoing light. Thus, the foregoing configuration can theoretically narrow the diffusion angle of the outgoing light.

The optical path unit 30 includes a waveguide 31 and the multiplexing path 32. The waveguide 31 has the entrance 31a into which the set of light rays L30 enter. The waveguide 31 and the multiplexing path 32 are connected together at a substantially right angle in Fig. 1. A surface of the junction between the waveguide and the multiplexing path that faces the waveguide 31 forms a reflective surface R3. The junction is further connected to the multiplexing path 22. The multiplexing paths 22 and 32 are connected together to extend in the same direction. The angle at which the multiplexing path 22 and the waveguide 31 are connected together and the angle at which the waveguide 31 and the multiplexing path 32 are connected together can be freely set as desired.

The set of light rays L30 entering the waveguide 31 through the entrance 31a passes through the waveguide 31 (a set of light rays L31), and is reflected off the reflective surface R3 to enter the multiplexing path 32 (a set of light rays L32). The reflective surface R3 is a reflective surface off which one of the sets of light rays entering the corresponding waveguides through the corresponding entrances (the set of light rays L31) is initially reflected. The angle of the reflective surface R3 can be freely adjusted as desired just like the angle of the reflective surface R1. An end portion of the multiplexing path 32 has a single exit 32a.

The set of light rays L31 entering the waveguide 31 through the entrance 31a (one of the sets of light rays) intersects with the set of light rays L4 (another one of the sets of light rays) emitted from the optical path unit 20 in the preceding stage in a first intersection region F3 located at the junction between the waveguide 31 and the multiplexing path 32. Thereafter, the set of light rays L31 is reflected off the reflective surface R3 to propagate through the multiplexing path 32 (the set of light rays L32). The set of light rays L32 reflected off the reflective surface R3 again intersects with the set of light rays L4 (the another one of the sets of the light rays) in a second intersection region F4. As a result, these sets of light rays are multiplexed (a set of light rays L5). Thereafter, the set of light rays L5 is emitted from the exit 32a toward the outside.

The second intersection region F4 of the optical path unit 30 is preferably set to be located at the exit 32a as illustrated in Fig. 1. This can narrow the diffusion angle of the outgoing light (the set of light rays L5). The position of the second intersection region F4 can be set by adjusting the direction of the optical axis of the set of light rays L31, the angle of the reflective surface R3, and the length of the multiplexing path 32.

A preferred embodiment of multiplexing of two sets of light rays (one of the sets of light rays reflected off the reflective surface and another one of the sets of light rays emitted from an optical path unit in the preceding stage) in a second intersection region will be described here with reference to Fig. 2. In Fig. 2, the optical path unit 30 is illustrated as an example. A similar configuration is applicable to the optical path unit 20. As illustrated in Fig. 2, the angle A between the two sets of light rays to be multiplexed is preferably 0.23° or less. This can narrow the diffusion angle of the multiplexed light rays. The angle A can be adjusted by changing the reflective surface inclination angle r3 of the reflective surface R3 (the angle between the optical axis of incident light from the entrance and the reflective surface) and the length (optical path length) w2 of the multiplexing path 32.

The length (optical path length) w1 of the waveguide 31 is preferably equal to or less than 1.5 mm. This can minimize the loss of the incident light. The same statement applies to the first and second optical path units.

The preferred embodiment of the present invention has been described above. However, the present invention should not be limited to the above-described embodiment, and appropriate changes and modifications can be made to the present invention.

### EXAMPLES

The present invention will now be described in further detail based on examples, but should not be limited by these examples.

### [Example 1]

An optical multiplexing device having a configuration similar to that of the optical multiplexing device 1 according to the first embodiment was subjected to an optical simulation using optical design software ZEMAX (registered trademark) (made by ZEMAX Development Corporation). A specific configuration of the optical multiplexing device of Example 1 will now be described. Red light rays were used as a set of light rays L10, blue light rays were used as a set of light rays L20, and green light rays were used as a set of light rays L30 (an input lens: FLGSRSA21A made by ALPS ALPINE CO., LTD.). The waveguide 11, 21, 31 of each optical path unit was set to have a length w1 (a length w1 in Fig. 2) of 1.259 mm. The waveguide 12 and the multiplexing path 22 were set to each have a length w2 (a length w2 in Fig. 2) of 1.5 mm. The multiplexing path 32 was set to have a length (a length w2 in Fig. 2) of 1.62 mm. The waveguides 11, 12, 21, and 31 of the optical path units were set to each have a width w3 (a length w3 in Fig. 2) of 5 µm. The maximum width of each of the multiplexing paths 22 and 32 (the width of a portion thereof near the preceding stage) was set to be 10 µm, and the minimum width thereof (the width of a portion thereof near the later stage) was set to be 5 µm. The waveguides and the multiplexing paths were set to each have a depth (a length in a direction perpendicular to the paper plane of Fig. 1) of 5 µm. That is to say, a cross section of the exit was set to have a size of 5 µm × 5 µm. The multiplexing angle at which the blue light rays are multiplexed with another set of light rays in the multiplexing path 22 (the multiplexing angle A in Fig. 2) was set to be 0.191° (the reflective surface inclination angle of the reflective surface R2: 45.096°). The multiplexing angle at which the green rays are multiplexed with another set of light rays in the multiplexing path 32 (the multiplexing angle A in Fig. 2) was set to be 0.177° (the reflective surface inclination angle of the reflective surface R3: 45.089°).

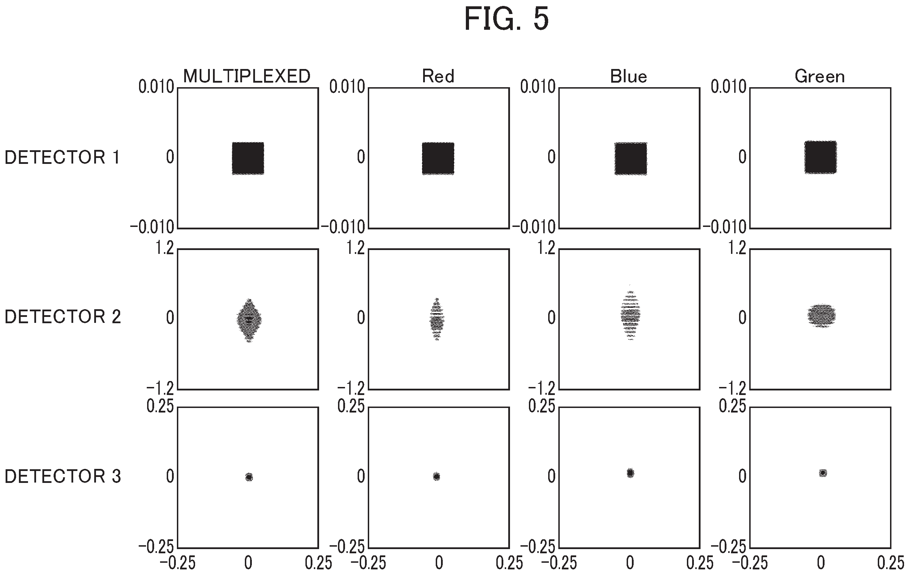

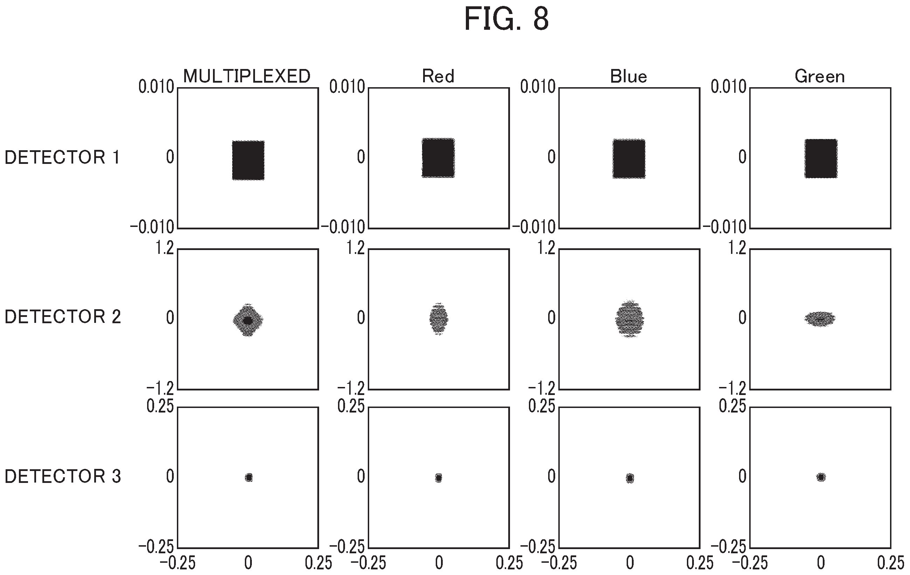

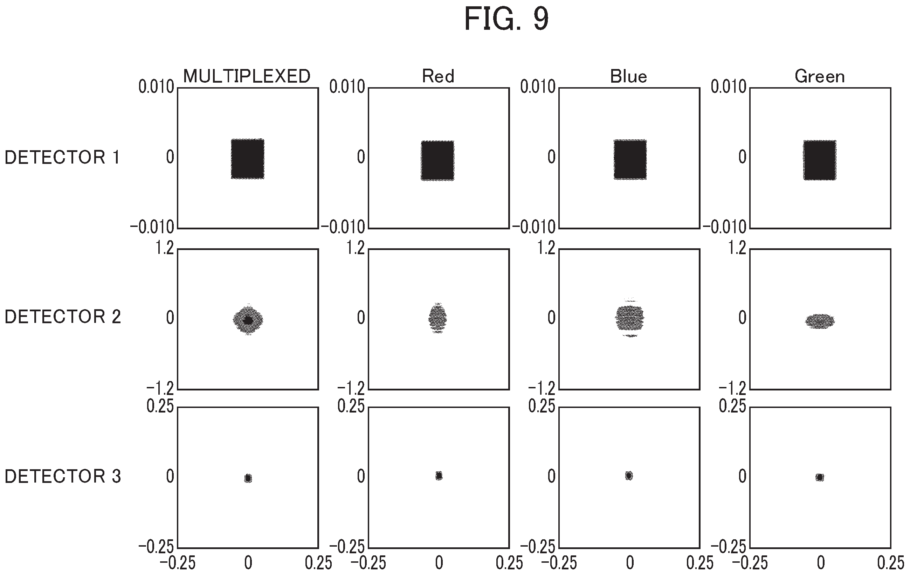

A detector (a detector 1) was located immediately behind the exit of the optical multiplexing device of Example 1 described above. An output lens (Edmund #84127 made by Edmund Optics Japan Co., Ltd.) was located on a portion of the optical axis 2.6 mm apart from the exit, and a detector (a detector 2) was located on a first plane (a plane of incidence). A detector (a detector 3) was located on a portion of the optical axis 17.547 mm apart from the first plane. Fig. 5 shows the distribution of the intensity of output light detected by each detector. The vertical and horizontal axes of each of Figs. 5 to 9 correspond to the detector size (unit: mm), and the center thereof (the vertical axis = 0, the horizontal axis = 0) corresponds to the position of the optical axis. In each of these figures, a dark area indicates an area corresponding to output light with high intensity.

### [Examples 2 to 4]

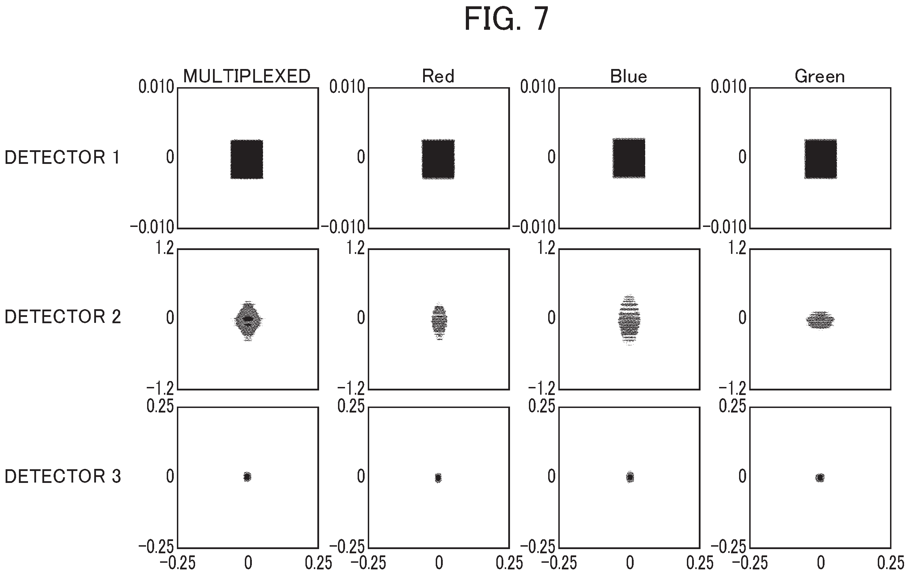

An optical multiplexing device according to each of Examples 2 to 4 was configured in a manner similar to that of Example 1 except that the optical multiplexing device has features shown in Table 1. The optical multiplexing device according to Example 3 was configured without having waveguides 11, 21, and 31. Optical simulations were performed using the optical multiplexing devices according to Examples 2 to 4 with detectors and an output lens arranged in a manner similar to that of Example 1. The distributions of the intensity of output light in Examples 2, 3, and 4 are shown in Figs. 7, 8, and 9, respectively.

### [Comparative Example 1]

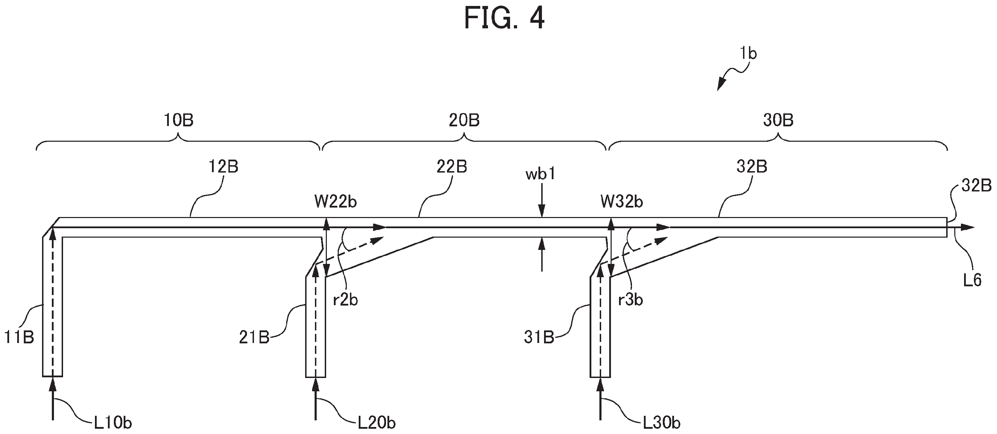

Fig. 4 shows a configuration of an optical multiplexing device 1b according to Comparative Example 1. As illustrated in Fig. 4, the optical multiplexing device 1b includes an optical path unit 10B, an optical path unit 20B, and an optical path unit 30B. Each optical path unit is provided with a corresponding one of waveguides 11B, 21B, and 31B (optical path length: 1.259 mm) into which a set of light rays L10b (red light), a set of light rays L20b (blue light), and a set of light rays L30b (green light) enter, respectively. The optical path unit 10B has a configuration similar to that of the optical path unit 10, and includes a waveguide 12B. The optical path units 20B and 30B each have a configuration different from that of the corresponding one of the optical path units 20 and 30, and incident light (one of the sets of light rays) is reflected before passing through a first intersection region so as to be multiplexed with another one of the sets of light rays. The above-described configuration has limitations in adequately reducing the multiplexing angle. The multiplexing paths 22B and 32B allow a plurality of sets of light rays to be multiplexed in the corresponding extended waveguide widths W22b and W32b (both 18 µm). Thereafter, the waveguide widths are both reduced to the width wb1 (6 µm). The multiplexing angles r2b and r3b are both 1°. The multiplexed sets of light rays L6 are emitted from the exit 32b. Details of the other features are shown in Table 1. However, the reference characters denoting features of the optical multiplexing device 1 corresponding to those of Comparative Example 1 are used as reference characters (such as W1 to W3) in Table 1.

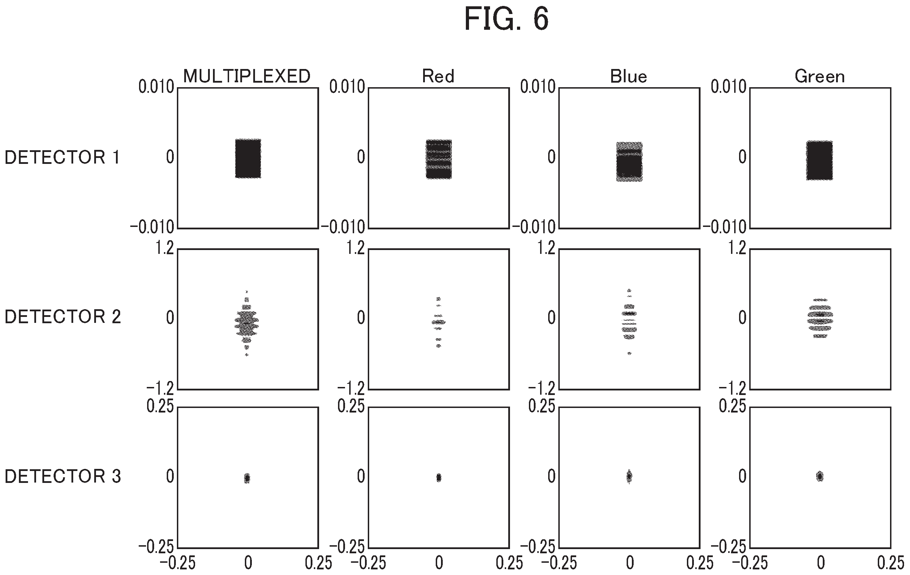

An optical simulation was performed using the optical multiplexing device 1b according to Comparative Example 1 described above with detectors and an output lens arranged in a manner similar to that of Example 1. Fig. 6 shows the distribution of the intensity of output light.

The results shown in Figs. 5 and 6 show that, for example, the divergence of beams on the detector 2 in Example 1 is narrower than that in Comparative Example 1. Thus, it is clear that the diffusion angle of outgoing light is narrower than that in Comparative Example.

**[Table 1]**

| | w1 (mm) | w2 (mm) | | | w3 (µm) | DEPTH (µm) | MULTIPLEXING PATH (µm) | | EXIT WIDTH (µm) | MULTIPLEXING ANGLE (°) | |
|---|---|---|---|---|---|---|---|---|---|---|---|
| | | WAVEGUIDE 12 | MULTIPLEXING PATH 22 | MULTIPLEXING PATH 32 | | | MAXIMUM WIDTH | MINIMUM WIDTH | | L20 | L30 |
| Comparative Example 1 | 1.259 | 1.5 | 1.5 | 1.62 | 4 | 4 | 18 | 6 | 6 | 1.0 | 1.0 |
| Example 1 | 1.259 | 1.5 | 1.5 | 1.62 | 5 | 5 | 10 | 5 | 5 | 0.191 | 0.177 |
| Example 2 | 1.0 | 1.5 | 1.5 | 1.5 | 6 | 5 | 12 | 6 | 6 | 0.229 | 0.229 |
| Example 3 | 0 | 1.5 | 1.5 | 1.5 | 5 | 5 | 10 | 5 | 6 | 0.191 | 0.191 |
| Example 4 | 0.1 | 1.5 | 1.5 | 1.5 | 5 | 5 | 10 | 5 | 6 | 0.191 | 0.191 |

Table 2 below shows the values of the amounts of light reaching the detectors according to each of Examples 1 to 4 and Comparative Example 1 described above. The waveguide transmittance (%) in Table 2 means a value (%) obtained by dividing the value of the amount of light that has reached the detector 1 by the value of the amount of light from a light source. The output lens conversion efficiency (%) means a value (%) obtained by dividing the value of the amount of light that has reached the detector 3 by the value of the amount of light that has reached the detector 2. The efficiency of use of the total amount of light (%) means a value (%) obtained by dividing the value of the amount of light that has reached the detector 3 by the value of the amount of light from the light source.

**[Table 2]**

| | DETECTOR 1 [W] | DETECTOR 2 [W] | DETECTOR 3 [W] | WAVEGUIDE TRANSMITTANCE [%] | OUTPUT LENS CONVERSION EFFICIENCY [%] | EFFICIENCY OF USE OF TOTAL AMOUNT OF LIGHT [%] |
|---|---|---|---|---|---|---|
| Comparative Example 1 | 1.3966 | 1.3764 | 1.2845 | 46.6 | 93.3 | 42.8 |
| Example 1 | 1.9611 | 1.9406 | 1.8437 | 65.4 | 95.0 | 61.5 |
| Example 2 | 2.2658 | 2.2644 | 2.1679 | 75.5 | 95.7 | 72.3 |
| Example 3 | 2.5952 | 2.6204 | 2.5201 | 86.5 | 96.2 | 84.0 |
| Example 4 | 2.5174 | 2.5098 | 2.4422 | 83.9 | 97.3 | 81.4 |

As shown in Table 2, it is clear that the optical multiplexing device according to each of Examples has a higher waveguide transmittance (%), a higher output lens conversion efficiency (%), and a higher efficiency of use of the total amount of light (%) than the optical multiplexing device according to Comparative Example 1 does.

### EXPLANATION OF REFERENCE NUMERALS

1 Optical Multiplexing Device
11a, 21a, 31a Entrance
F2, F3 First Intersection Region
F21, F4 Second Intersection Region
22, 32 Multiplexing Path
11, 21, 31 Waveguide
32a Exit
A Multiplexing Angle
10 First Optical Path Unit
20 Second Optical Path Unit
30 Third Optical Path Unit

## Claims

1. An optical multiplexing device capable of multiplexing a plurality of sets of light rays, the device comprising:
a plurality of entrances into which a corresponding one of the plurality of sets of light rays enters;
a single exit from which the sets of the plurality of light rays multiplexed exit;
a first intersection region allowing one of the plurality of sets of light rays that have entered the optical multiplexing device through the plurality of entrances to intersect with another one of the plurality of sets of light rays;
a reflective surface off which the one of the plurality of sets of light rays having passed through the first intersection region is reflected; and
a second intersection region allowing the one of the plurality of sets of light rays reflected off the reflective surface to intersect with the another one of the plurality of sets of light rays again.

2. The optical multiplexing device according to claim 1 further comprising:
a multiplexing path through which the plurality of sets of light rays are multiplexed, wherein
a back end of the multiplexing path is connected to another multiplexing path in a later stage or has the exit,
an angle of inclination of the reflective surface with respect to the one of the plurality of sets of light rays entering the optical multiplexing device through the plurality of entrances is set so that the second intersection region is located at a junction between the multiplexing path and the another multiplexing path or at the exit, and
a multiplexing angle that is an angle between the one of the plurality of sets of light rays reflected off the reflective surface and the another one of the plurality of sets of light rays is 0.23° or less.

3. The optical multiplexing device according to claim 1 or 2 further comprising:
a waveguide having an entrance from among the plurality of entrances; and a multiplexing path connected to the waveguide at a predetermined angle, wherein
the waveguide has a length of 1.5 mm or less.

4. The optical multiplexing device according to claim 1 or 2 further comprising:
a first optical path unit having an entrance from among the plurality of entrances;
at least one second optical path unit having the entrance from among the plurality of entrances, the first intersection region, the reflective surface, and the second intersection region; and
a third optical path unit having the entrance from among the plurality of entrances, the first intersection region, the reflective surface, the second intersection region, and the exit,
the at least one second optical path unit comprising one or more second optical path units installed as needed.
